# EUROPEAN PATENT APPLICATION

(11) **EP 2 015 596 A1**
(43) Date of publication of application: **14.01.2009**
(21) Application number: 06745909.9
(22) Date of filing: 28.04.2006
(51) Int. Cl.: H04Q 7/38

(54) **QoS SERVER IN MOBILE COMMUNICATION SYSTEM**

(71) Applicant: Fujitsu Ltd., Kawasaki-shi, Kanagawa 211-8588 (JP)
(72) Inventor: WATANABE, Naotoshi, Kawasaki-shi, Kanagawa 211-8588 (JP)
(74) Representative: Stebbing, Timothy Charles
(86) International application number: PCT/JP2006/309050
(87) International publication number: WO 2007/125606

(57) **Abstract**

A QoS server comprises a receiving unit that receives a QoS setting request for the communication flow of a mobile terminal; and a transmitting unit that simultaneously transmits a QoS setting instruction based on the QoS setting request to both of a wireless system mobile management node that accommodates the mobile terminal and a core network mobile management node that manages the wireless access system mobile management node.

## Description

### Technical Field

The present invention relates to a technique involved in reducing a Quality of Service (QoS) setting response time in a mobile communication system.

### Background Art

In recent years, demands involved in a QoS service have been increasing in a mobile communication service field.

Employed for a conventional mobile communication system has been a terminal-driven scheme in which a mobile node (MN) performs a QoS designation for each individual flow, and a QoS setting is performed on a network (NW) side according to the designation.

At present, in order to provide the QoS service with high efficiency, studies are being performed on a network-driven scheme in which the network side handles a plurality of flows collectively as a QoS control based on information obtained from an application used by each MN through a network.

In a network-driven QoS setting scheme, the QoS setting is performed on the flow not from the MN but from the network side through a judgment performed by the application located on the network side. In this case, it becomes an object to reduce a QoS setup time and a response time.

In a case where there occurs a QoS request from the application, the QoS setting needs to be performed to a mobile management node that provides a communication path to the MN corresponding to a movement thereof. In general, mobile management nodes are provided in such a hierarchical and multistage manner as to be divided into a node accommodating a movement within each of wireless access networks corresponding to various wireless access systems and a node which connects the wireless access system networks and accommodates a movement between the access system networks. In this specification, the former is called a wireless access system mobile management node (access system mobility management (ASMM)), and the latter is called a core network mobile management node (core network mobility management (CNMM)). The CNMM is host to ASMM in their relationship, and manages a plurality of ASMMs that are connected thereto.

In a case where the application determines to provide a QoS service to a communication of a given MN, the application transmits a QoS request to a QoS server located on the network side. The QoS server that has received the QoS request transmits an instruction for a QoS setting to the wireless access system mobile management node and the core network mobile management node which provide a communication path to the MN to which the QoS service is to be provided.

Herein, in a conventional framework, the core network mobile management node knows the wireless access system mobile management node corresponding to the MN. On the other hand, the application and the QoS server do not know the corresponding wireless access system mobile management node. Therefore, the QoS setting performed from the QoS server to the wireless access system mobile management node is performed via the core network mobile management node.

In this case, the QoS setting performed from the QoS server to the core network mobile management node requires one hop. On the other hand, the QoS setting performed from the QoS server to the wireless access system mobile management node is performed via the core network mobile management node, thereby requiring two hops. Therefore, the latter two hops impose a limitation on a time required to complete the QoS setting performed to the wireless access system mobile management node and the core network mobile management node. The two hops become an obstacle to reduction of a QoS setting time.

In addition, as a technique related to the present invention, there is a technique that is capable of a construction of a security association (SA) for forwarding u-plane information between foreign agents (FAs) using an authentication server (see, for example, Patent Document 1). The technique disclosed in Patent Document 1 is capable of an establishment of a virtual private network (VPN) path (u-plane) based on IPsec to be performed at a time of authenticating a mobile terminal even between a home agent (HA) and a network device by notifying VPN information on a user from an authentication server not only to the HA but also to each network device (such as the FA). However, the QoS server is not included as an entity, and an establishment of SA for forwarding C-plane information from the QoS server to the FA is not also included. Further, a processing of simultaneously performing the QoS setting from the QoS server to the FA and the HA is not included.
Patent Document 1: JP 2002-44141 A
Non-Patent Document 1: TR 23.882: "3GPP System Architecture Evolution: Report on Technical Options and Conclusions" (Sec7. 12 Key Issue QoS concepts),
http://www.3gpp.org/ftp/Specs/html-info/23-series.htm
Non-Patent Document 2: TS 23.203: "Policy and charging control architecture",
http://www.3gpp.org/ftp/Specs/html-info/23-series.htm
Non-Patent Document 3: TS 23.107: "Quality of Service (QoS) concept and architecture", http://www.3gpp.org/ftp/Specs/html-info/23-series.htm

### Disclosure of the Invention

### Problems to be solved by the Invention

As described hereinabove, in a current-situation framework, the QoS server that instructs the QoS setting does not know which a wireless access system mobile management node to transmit the instruction to. Therefore, the QoS setting performed to the wireless access system mobile management node must be performed via the core network mobile management node, which increases a QoS setting time.

Further, because of characteristics of a mobile communication, a secure control communication relationship (security association (SA)) may not exist between the QoS server and the wireless access system mobile management node in a case where the wireless access system mobile management node and the QoS server do not exist in the same network.

In such a case, even if the QoS server comes to know the wireless access systemmobile management node through some method, a secure QoS setting may be impossible because there is no SA therebetween, in other words, no secure communication path that directly connects the QoS server with the wireless access systemmobile management node.

An object of the present invention is to provide a technique that can reduce a time required for a network side to spontaneously perform a QoS setting with respect to a flow used by a mobile terminal.

### Means for solving the Problems

In order to achieve the object, the present invention employs the following configuration.

Specifically, a QoS server according to the present invention includes:
a receiving unit that receives a QoS setting request for a communication flow, which is generated on a network side, of a mobile terminal; and
a transmitting unit that transmits, in parallel, a QoS setting instruction based on the QoS setting request to both of a wireless access system mobile management node that accommodates the mobile terminal and a core network mobile management node that manages the wireless access system mobile management node.

### Effects of the Invention

According to the present invention, it can be provided the technique that can reduce the time required for the network side to spontaneously perform the QoS setting with respect to the flow used by the mobile terminal.

### Brief Description of the Drawings

FIG. 1 is an explanatory diagram of a conventional technique and a problem thereof.
FIG. 2 is a conceptual diagram of the present invention.
FIG. 3A is a diagram showing a mobile communication system according to a second embodiment.
FIG. 3B is a diagram showing a mobile communication system according to a third embodiment.
FIG. 3C is a diagram showing a mobile communication system according to a fourth embodiment.
FIG. 3D is a diagram showing a mobile communication system according to a fifth embodiment.
FIG. 4A is an explanatory diagram of a sixth embodiment.
FIG. 4B is an explanatory diagram of the sixth embodiment.
FIG. 4C is an explanatory diagram of the sixth embodiment.
FIG. 5 is a sequence diagram for explaining a seventh embodiment.
FIG. 6 is a sequence diagram for explaining an eighth embodiment.
FIG. 7 is a sequence diagram for explaining a ninth embodiment.
FIG. 8 is a sequence diagram for explaining a tenth embodiment.
FIGs. 9A and 9B are sequence diagrams for explaining an outline of an eleventh embodiment.
FIG. 10 is a sequence diagram for explaining details of the eleventh embodiment.
FIG. 11 is a sequence diagram for explaining the details of the eleventh embodiment.
FIG. 12 is a sequence diagram for explaining the details of the eleventh embodiment.
FIG. 13 is an explanatory diagram of the eleventh embodiment.
FIG. 14 is a sequence diagram for explaining details of a twelfth embodiment.
FIG. 15 is a sequence diagram for explaining the details of the twelfth embodiment.
FIG. 16 is a sequence diagram for explaining the details of the twelfth embodiment.
FIG. 17 is a sequence diagram for explaining details of a fourteenth embodiment.

### Best Mode for carrying out the Invention

### [Outline of the Invention]

The present invention is provided with means for recognizing each other between each of a wireless access system mobile management node (ASMM) and a core network mobile management node (CNMM), and a QoS server upon or after an authentication, for example. Based on the recognition, the QoS server performs a QoS setting individually and simultaneously to both of the ASMM and the CNMM. This can reduce a QoS setting time.

Further, in a case where the ASMM and the CNMM are located in a visited network, a security association (SA) key and information on a user (MN) are distributed/exchanged between the QoS server and the ASMM/CNMM. Accordingly, both recognize each other. Further, the SA is dynamically set up therebetween. The QoS server uses the SA that has been set up to perform the QoS setting individually and simultaneously to the ASMM and the CNMM. This reduces the QoS setting time. In addition, in a case where a network side spontaneously performs the QoS setting with respect to a flow used by amobile terminal, it is possible to positively enable a secure communication path to be used for the purpose of the QoS setting.

### [Conventional system]

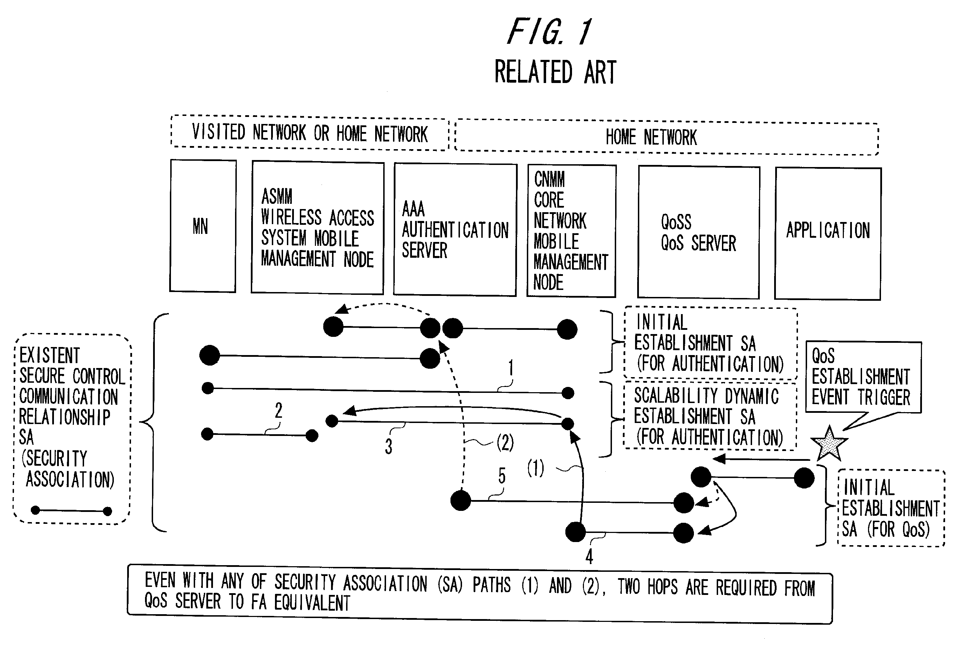

FIG. 1 is a diagram showing an operation example of a conventional system. As nodes constituting a mobile communication system, FIG. 1 shows an application, a QoS server (QoSS), a core network mobile management node (CNMM), an authentication server (access, authorization, and accounting server (AAA server); a server that performs authentication, authorization, charging management for a user or a service), a wireless access system mobile management node (ASMM), and a mobile terminal (MN). The application, the QoSS, and the CNMM are located within a home network (home NW), and the ASMM and the MN are located in the home network or the visited network (visited NW). The AAA server is generally disposed in each of the home network and the visited network. The home network represents a network of a carrier to which the user (MN) subscribes, and the visited network represents a network of a carrier different from the subscribed carrier in which the user (MN) is located.

In FIG. 1, a line segment having black circles at its edges as end points represents a security association (SA) constructed in an existent framework between related nodes shown in an upper portion of FIG. 1.

The SA is constructed of sharing an identifier that identifies an SA relationship and key information for completeness guarantee or secrecy. For example, in the case where Mobile IPv4 is applied, there can be employed a mode to which a foreign agent (FA) and a home agent (HA) are applied as the wireless access system mobile management node (ANMM) and the core network mobile management node (CNMM) respectively. In RFC4004, there is provided a technique for constructing an SA between an MN and an HA, between an MN and an FA, and between an FA and an HA. The technique can be used to construct three SAs 1, 2, and 3 as shown in a middle stage of FIG. 1.

In the conventional framework, there is an idea that if the QoS server in the home network performs a QoS setting to an ASMM in a visited network having a different network operator (carrier), the QoS server knows the ASMM and performs the QoS setting to the ASMM via a CNMM having an SA relationship with the ASMM (see route (1) of FIG. 1). The QoS setting with respect to the CNMM is also necessary. Therefore, when a QoS setting request is issued to the QoS server by occurring a QoS setting event trigger at the application, the QoS server uses an SA 4 constructed between the QoS server and the CNMM to issue an QoS setting instruction to the CNMM, and the CNMM uses the SA 3 constructed between the CNMM and the ASMM to issue an instruction for a QoS setting to the ASMM.

By using the route (1), the QoS setting can be effected to both of the CNMM and the ASMM. However, two hops are required to complete the setting, and it is necessary to perform such a setting as to connect the QoS server, the CNMM, and the ASMM in series to each other for the QoS setting.

In contrast, there is an idea of employing an setting route such as a route (2) shown in FIG. 1. That is, along the route, the CNMM uses an SA 5 constructed between the QoS server and the AAA server to issue an instruction for a QoS setting to the AAA server, and the AAA (knowing the ASMM) forwards the instruction for the QoS setting to the ASMM. However, even by using the route (2), the QoS setting instruction is passed via the AAA server, which requires two hops or more. Although omitted in FIG. 1, the AAA servers are installed both in the home network and in the visited network. Therefore, in actuality, the QoS setting instruction is forwarded along the route: the CNMM → the AAA server (in the home network) → the AAA server (in the visited network) → the ASMM. Accordingly, the number of hops is 3.

### [Outline of Embodiments]

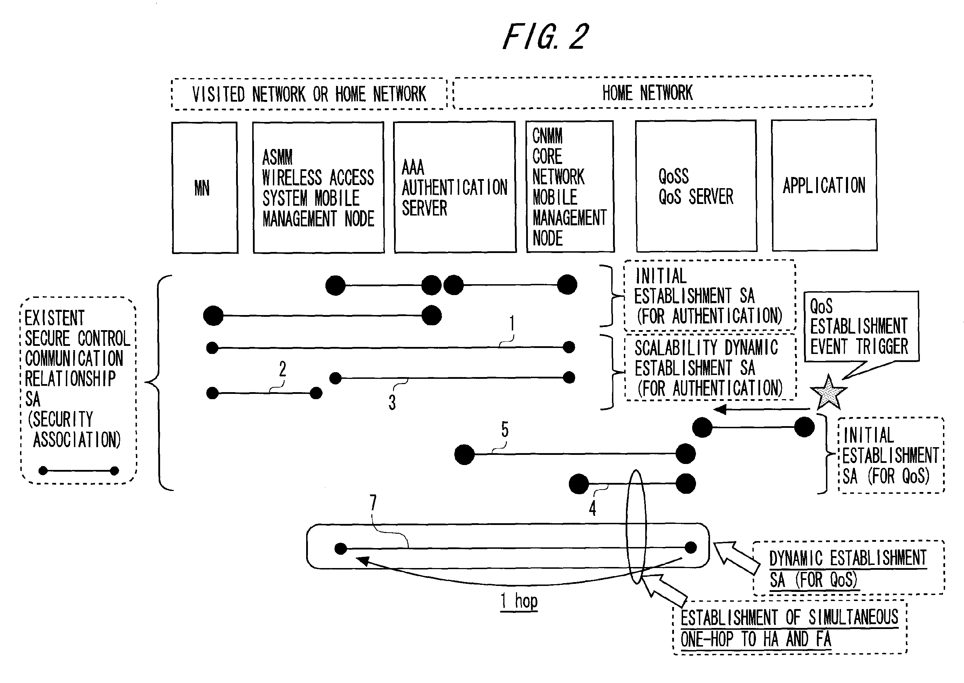

FIG. 2 is a diagram showing an outline of the mobile communication system according to the present invention. In the system shown in FIG. 2, by methods that are individually described hereinbelow, information necessary to construct an SA is distributed to the QoS server and the wireless access system mobile management node (ASMM) to thereby construct an SA (SA 7 in a lowermost stage of FIG. 2). The QoS server uses the SA 7 and the SA 4 constructed between the QoS server and the core network mobile management node to perform the QoS setting to the CNMM and the ASMM. That is, when the QoS setting event trigger with respect to a given mobile terminal occurs at the application, the QoS server functions as a device including a receiving unit that receives the QoS setting request from the application and a transmitting unit that transmits, in parallel, a QoS setting instruction based on the QoS setting request to the CNMM and the ASMM that control a communication flow of a given mobile terminal. Accordingly, the QoS setting with respect to each of the CNMM and the ASMM can be performed at one hop, which can reduce the QoS setting time.

Further, in the present invention, there is an idea of a configuration that uses the CNMM in the visited network. In this case, an SA is constructed between the CNMM and the QoS server.

Further, depending on an operational policy of a visited network operator (carrier), there may be a case where only the QoS server in the visited network is permitted to perform settings with respect to a node located in the visited network. In this case, the QoS setting performed from the QoS server in the home network to the node located in the home network and transmission of the QoS setting request to the QoS server in the visited network are performed, in parallel. In a case where the QoS server in the visited network performs the QoS setting to a visited network node, if there is a plurality of visited network nodes should be do the QoS setting, the QoS server in the visited network performs the QoS setting to the plurality of visited network nodes, in parallel.

### [First Embodiment]

As a first embodiment of the present invention, description is made of a mobile communication system as follows.
[1] A mobile communication system, which provides a QoS communication service based on a request issued from an application on a network side with regard to a communication of a given mobile terminal, and reduces a QoS setting time by performing a QoS setting from a QoS server within a network in parallel to both of a wireless access system mobile management node that accommodates the mobile terminal and a core network mobile management node that connects a plurality of wireless access systems to one another.

The mobile communication system according to the first embodiment has a configuration shown in FIG. 2. In FIG. 2, when the application in the home network determines that a QoS setting is to be performed to the MN serving as the mobile terminal (a QoS setting event trigger occurs), the application issues a QoS setting request to the QoS server. The QoS server uses the SAs 4 and 7 constructed between the QoS server and the CNMM/ASMM, respectively, to issue an instruction for a QoS setting to the CNMM and the ASMM related to the MN. The CNMM and the ASMM set for a QoS (included in the QoS setting instruction) designated by the QoS server with respect to a communication flow used by the MN.

According to the first embodiment, the QoS setting with respect to the CNMM and the ASMM are executed in parallel. The QoS setting with respect to the CNMM and the ASMM can be started at the same time. Accordingly, it is possible to reduce the QoS setting time to approximately half the time for the system of FIG. 1.

### [Second Embodiment]

Next, description is made of a second embodiment of the present invention. The second embodiment includes points in common with the first embodiment, and hence description of the points in common is omitted, while different points are mainly described.

As the second embodiment of the present invention, description is made of a mobile communication system as follows.

[2] A mobile communication system in accordance with the item [1], in which: the mobile terminal is located in a home network serving as a network of a carrier to which the mobile terminal subscribes; and both of the wireless access system mobile management node and the core network mobile management node are nodes of a home network operator (the carrier).

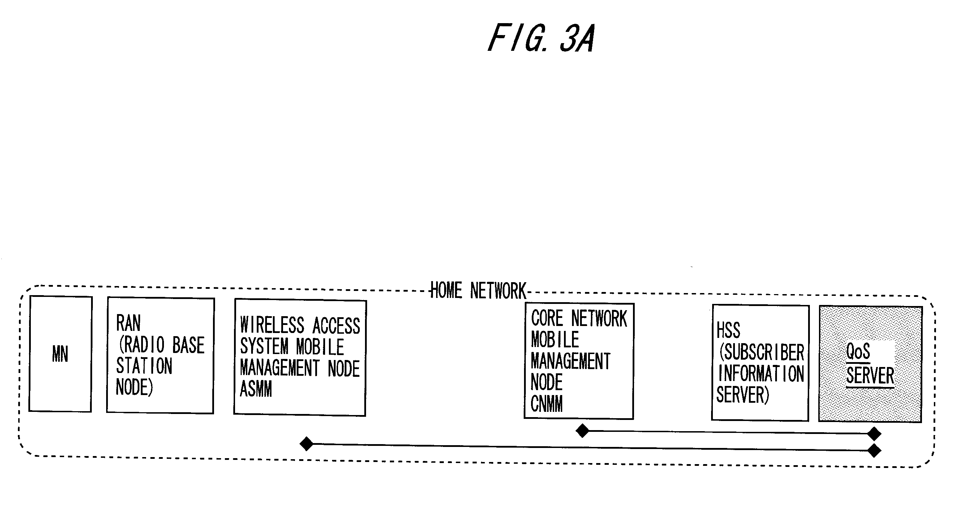

FIG. 3A is a diagram showing the mobile communication system according to the second embodiment. FIG. 3A shows the QoS server, a subscriber information server (home subscriber server (HSS) ; a server that retains subscriber information), the CNMM, the ASMM, a radio base station node (radio access node (RAN)), and the mobile terminal (MN), which are located in the home network.

In the second embodiment, the QoS setting with respect to the CNMM and the ASMM shown in FIG. 2 is applied to the mobile communication system shown in FIG. 3A. That is, in FIG. 3A, the QoS server transmits the QoS setting instruction to the CNMM and the ASMM in the home network in parallel.

In the second embodiment, both of the CNMM and the ASMM are located within the same home network. Therefore, the SA for the purpose of the QoS setting is not always necessary. However, it is necessary to cause the QoS server to recognize the node (ASMM) that accommodates the MN to which a QoS service is to be provided, through a request issued from the application (existing, although not shown in FIG. 3A, within the home network). Such recognition can be realized by applying seventh to fourteenth embodiments described later.

According to the second embodiment, in a similar manner to the first embodiment, it is possible to reduce the QoS setting time to approximately half the time for the system of FIG. 1.

### [Third Embodiment]

Next, description is made of a third embodiment of the present invention. The third embodiment includes points in common with the first embodiment, and hence description of the points in common is omitted, while different points are mainly described.

As the third embodiment of the present invention, description is made of a mobile communication system as follows.
[3] A mobile communication system in accordance with the item [1], in which: the mobile terminal is located in a visited network (visited NW) different from the home network; the wireless access system mobile management node is a node in the visited network; and the core network mobile management node is a node in the home network.

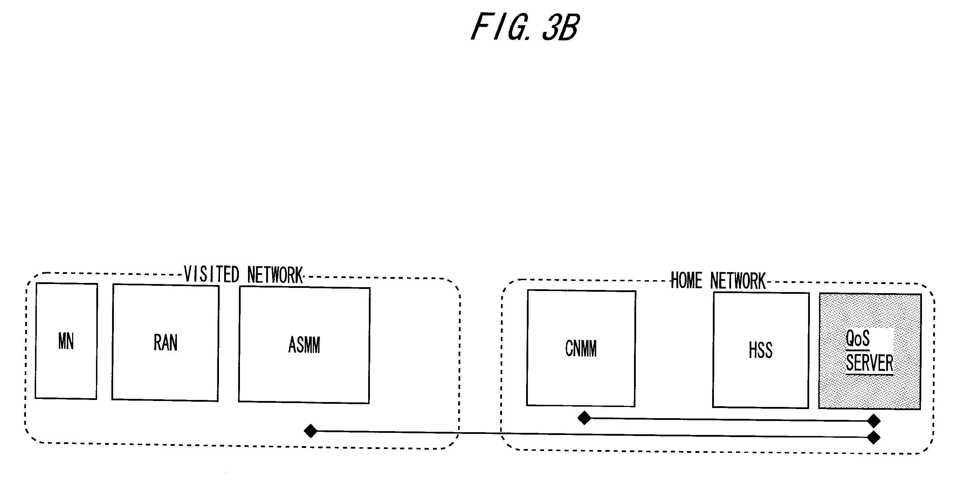

FIG. 3B is a diagram showing the mobile communication system according to the third embodiment. FIG. 3B shows the QoS server, the subscriber information server (HSS), and the CNMM, which are located in the home network, and the ASMM, the radio base station node (RAN), and the mobile terminal (MN), which are located in the visited network.

In the third embodiment, the QoS setting with respect to the CNMM and the ASMM shown in FIG. 2 is applied to the mobile communication system shown in FIG. 3B. That is, in FIG. 3B, the QoS server transmits the QoS setting instruction to the CNMM in the home network and the ASMM in the visited network in parallel.

In the third embodiment, a direct QoS setting is performed from the QoS server in the home network to the ASMM across networks whose operators (carriers) are different (between the home network and the visited network) without the need of a special relay node on a visited network side. Accordingly, the SA is constructed between the QoS server in the home network and the ASMM in the visited network.

According to the third embodiment, in a similar manner to the first embodiment, it is possible to reduce the QoS setting time to approximately half the time for the system of FIG. 1.

### [Fourth Embodiment]

Next, description is made of a fourth embodiment of the present invention. The fourth embodiment includes points in common with the first embodiment, and hence description of the points in common is omitted, while different points are mainly described.

As the fourth embodiment of the present invention, description is made of a mobile communication system as follows.
[4] A mobile communication system in accordance with the item [1], in which: the mobile terminal is located in a visited network different from the home network; and both of the wireless access system mobile management node and the core network mobile management node are located in the visited network.

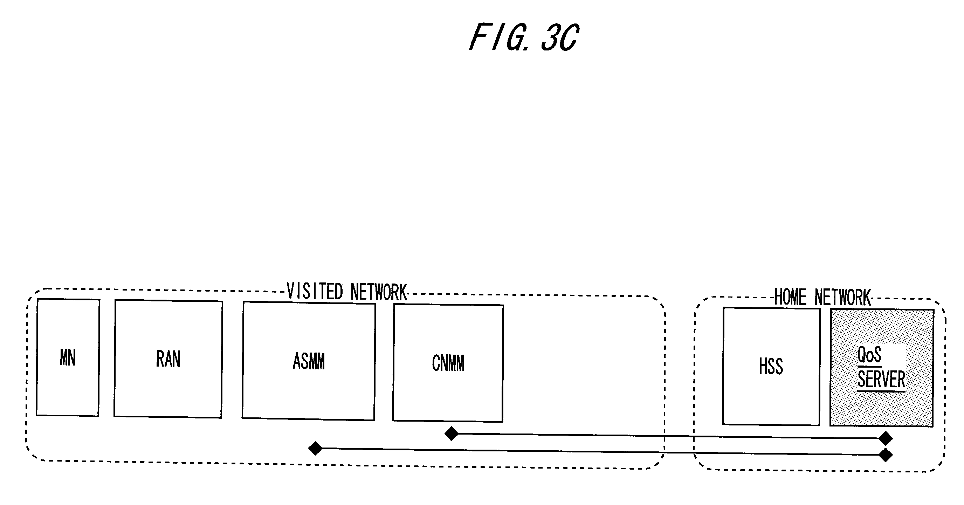

FIG. 3C is a diagram showing the mobile communication system according to the fourth embodiment. FIG. 3C shows the QoS server and the subscriber information server (HSS), which are located in the home network, and the CNMM, the ASMM, the radio base station node (RAN), and the mobile terminal (MN), which are located in the visited network.

In the fourth embodiment, the QoS setting with respect to the CNMM and the ASMM shown in FIG. 2 is applied to the mobile communication system shown in FIG. 3C. That is, in FIG. 3C, the QoS server transmits the QoS setting instruction to the CNMM and the ASMM in the visited network in parallel.

In the fourth embodiment, the CNMM and the ASMM in the visited network are used for the QoS setting to perform the communication without passing via at least the CNMM in the home network. That is, in the fourth embodiment, the QoS server in the home network directly controls the CNMM and the ASMM in the visited network.

According to the fourth embodiment, in a similar manner to the first embodiment, it is possible to reduce the QoS setting time to approximately half the time for the system of FIG. 1.

### [Fifth Embodiment]

Next, description is made of a fifth embodiment of the present invention. The fifth embodiment includes points in common with the first embodiment, and hence description of the points in common is omitted, while different points are mainly described.

As the fifth embodiment of the present invention, description is made of a mobile communication system as follows.

[5] A mobile communication system in accordance with the item [1], in which: the mobile terminal is located in the visited network different from the home network; and the parallel QoS setting is performed by using the wireless access system mobile management node and the core network mobile management node in the visited network and the core network mobile management node in the home network which is connected to the core network mobile management node in the visited network.

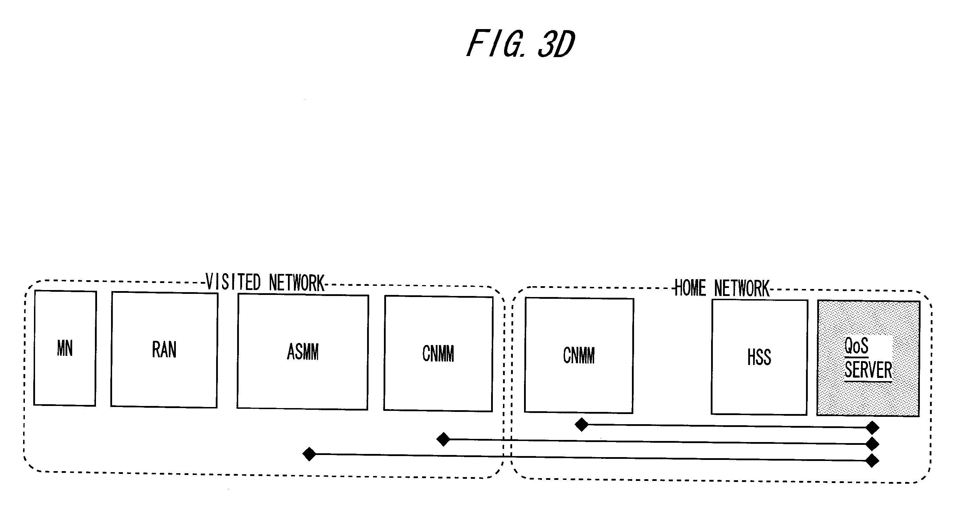

FIG. 3D is a diagram showing the mobile communication system according to the fifth embodiment. FIG. 3D shows the QoS server, the subscriber information server (HSS), and the CNMM, which are located in the home network, and the CNMM, the ASMM, the radio base station node (RAN), and the mobile terminal (MN), which are located in the visited network.

In the fifth embodiment, the QoS setting with respect to the CNMM and the ASMM shown in FIG. 2 is applied to the mobile communication system shown in FIG. 3D. That is, in FIG. 3D, the QoS server transmits the QoS setting instruction for the MN to which a QoS service is to be provided, to the CNMM in the home network, and the CNMM and the ASMM in the visited network in parallel.

According to the fifth embodiment, in a similar manner to the first embodiment, it is possible to reduce the QoS setting time to approximately half the time for the system of FIG. 1.

### [Sixth Embodiment]

Next, description is made of a sixth embodiment of the present invention. The sixth embodiment includes points in common with the first embodiment, and hence description of the points in common is omitted, while different points are mainly described.

As the sixth embodiment of the present invention, description is made of a mobile communication system as follows.

[6] A mobile communication system in accordance with the items [3], [4], and [5], in which: the QoS server in the home network issues a QoS setting instruction to a node in the visited network; the QoS server in the visited network in parallel performs the QoS setting to a node related to the MN located in the visited network as necessary; and in a case where a node to which the QoS setting is to be performed is located in the home network, the QoS server in the home network transmits the QoS setting instruction to the node and transmits the QoS setting instruction to the QoS server in the visited network in parallel.

The sixth embodiment shows an example of realizing the QoS setting shown in FIG. 2 in a case where a direct control of the visited network node is not permitted to be performed from the home network by an operational policy of a visited network operator (carrier).

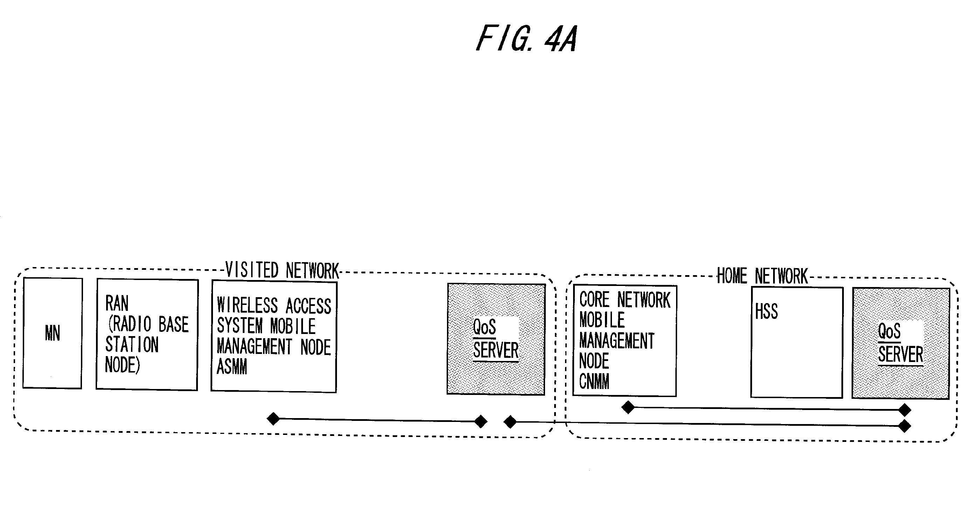

FIGS. 4A to 4C are explanatory diagrams of the sixth embodiment, corresponding to the system configuration shown in FIGS. 3B to 3D. However, FIGS. 4A to 4C show the QoS server in the visited network.

In the system configuration shown in FIG. 4A, the QoS server in the home network simultaneously performs the QoS setting to the CNMM located in the home network (QoS setting instruction transmission) and the QoS setting request with respect to the QoS server in the visited network. The QoS server in the home network previously knows a location of the QoS server in the visited network. In FIG. 4A, the QoS server in the visited network performs the QoS setting to the ASMM in the visited network.

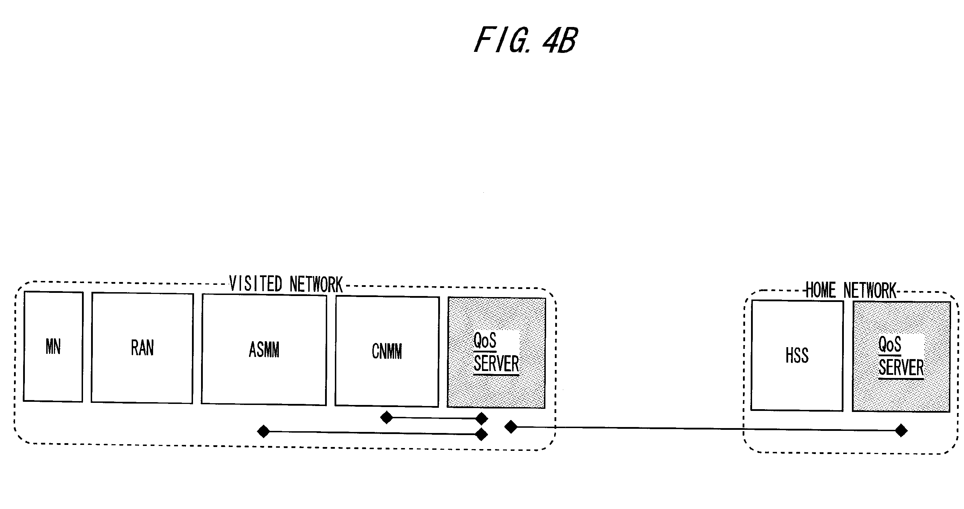

In the system configuration shown in FIG. 4B, the QoS server in the home network transmits the QoS setting request to the QoS server in the visited network of the MN. The QoS server in the visited network performs the QoS setting (QoS setting instruction transmission) to the CNMM and the ASMM that are located in the visited network in parallel.

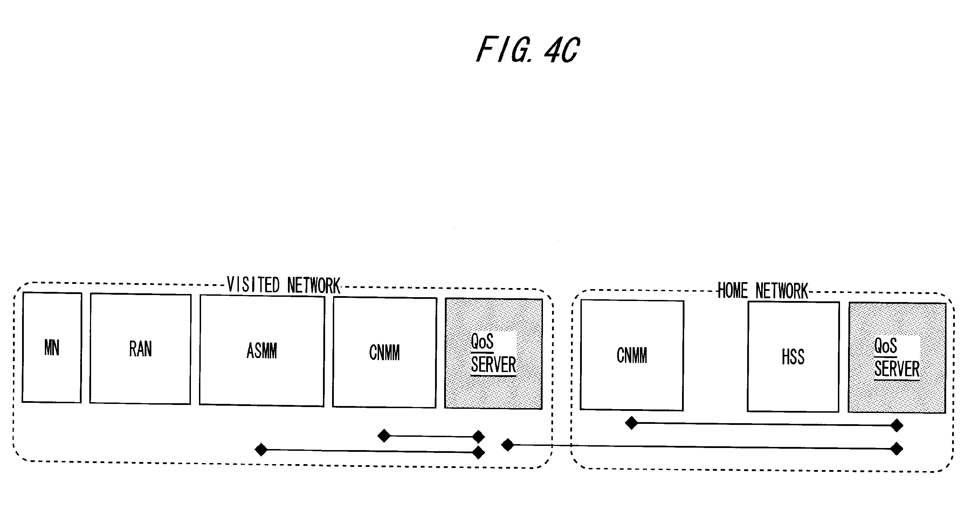

In the system configuration shown in FIG. 4C, the QoS server in the home network transmits the QoS setting instruction to the CNMM in the home network and the QoS setting request to the QoS server in the visited network in parallel. The QoS server in the visited network performs the QoS setting to the CNMM and the ASMM in the visited network.

In the sixth embodiment, an establishment time with respect to the wireless access system mobile management node in the visited network is the same as the time for the system shown in FIG. 1. However, the QoS server in the home network transmits the QoS setting request to the QoS server in the visited network with the QoS setting instruction for the home network. Accordingly, it is possible to reduce the QoS setting time.

For example, in the system shown in FIG. 1, it requires three hops for the QoS setting instruction to reach the ASMM in the visited network. On the other hand, the systems shown in FIGS. 4B and 4C allow the QoS setting instruction to reach the ASMM in the visitednetworkwithtwohops. Accordingly, asawhole, the QoS setting time can be reduced to nearly 2/3 of the QoS setting time for the system of FIG. 1.

### [Seventh Embodiment]

Next, description is made of a seventh embodiment of the present invention. The seventh embodiment includes points in common with the first embodiment, and hence description of the points in common is omitted, while different points are mainly described.

As the seventh embodiment of the present invention, description is made of a method as follows.
[7] A method of recognizing, by the QoS server in the home network in accordance with the items [1] to [6], a wireless access system mobile management node that accommodates a mobile terminal, in which a subscriber information data server in the home network which constantly knows a correspondence relationship between the wireless access system mobile management node and the core network mobile management node that are related to the mobile terminal notifies a home network QoS server of the correspondence relationship between the MN and the node each time the correspondence relationship is constructed or each time the correspondence relationship is changed.

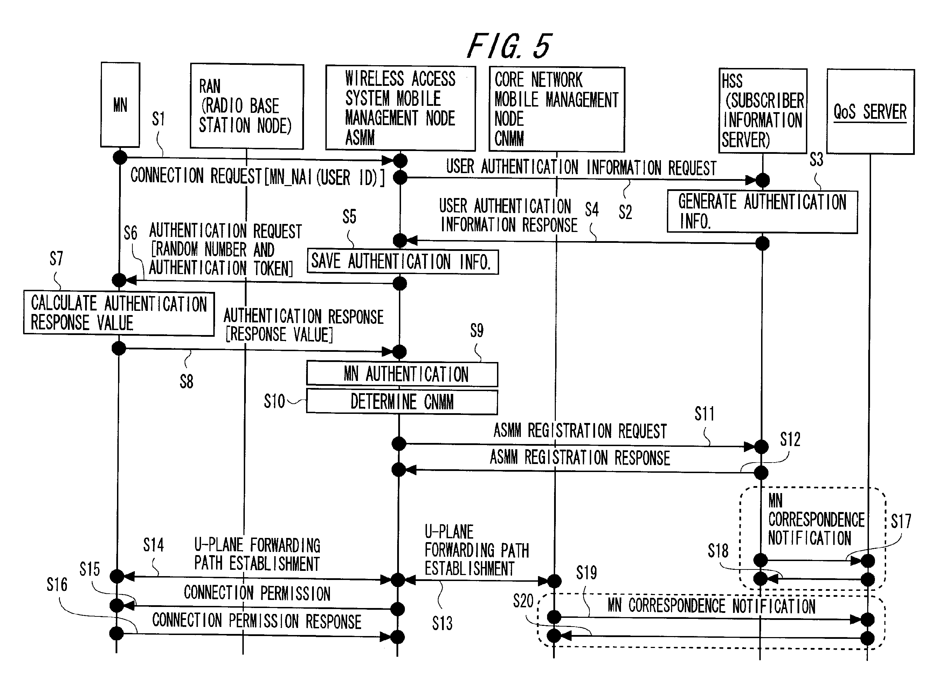

FIG. 5 is a sequence diagram for explaining the seventh embodiment. In FIG. 5, the mobile terminal (MN) transmits a connection request to the ASMM when a communication is started or when the ASMM is changed (Step S1). The connection request is shown as including a mobile node_network access identifier (MN_NAI) as an example of a user ID. The MN_NAI is an NAI for uniquely identifying the MN.

The connection request is received by the ASMM via the radio base station node (RAN). Then, the ASMM transmits a user authentication information request to the subscriber information server (HSS) (Step S2). In this embodiment, the HSS includes a function as the AAA server.

The HSS that has received the user authentication information request generates authentication information (Step S3), and transmits to the ASMM a user authentication information response including the authentication information (Step S4). The ASMM that has received the user authentication information response saves the authentication information (Step S5), and transmits an authentication request including a random number and an authentication token to the MN via the RAN (Step S6).

The MN that has received the authentication request calculates an authentication response value based on the random number and the authentication token that are included in the authentication request (Step S7), and transmits an authentication response including a response value to the ASMM (Step S8).

The ASMM that has received the authentication response performs an MN authentication processing by using the authentication information saved in Step S5 and the authentication response received from the MN (Step S9). If the MN authentication is successful, the ASMM determines the CNMM to be used for the communication of the MN (Step S10). After that, the ASMM transmits an ASMM registration request to the HSS (Step S11). The ASMM registration request includes an identifier of the ASMM (ASMM-ID) and an identifier of the MN (MN_NAI) as information indicating the correspondence relationship between the ASMM and the MN.

The HSS that has received the ASMM registration request performs a registration processing for the correspondence relationship (stores the MN_NAI and the ASMM-ID in association with each other into a predetermined the storage area), and then transmits an ASMM registration response to the ASMM (Step S12).

After that, a user-plane (u-plane) forwarding path establishment is performed between the ASMM and the CSMM (Step S13), and the u-plane forwarding path establishment is further performed between the ASMM and the MN (Step S14).

Upon completion of the u-plane establishment, a connection permission is issued from the ASMM to the MN (Step S15), and the MN transmits a connection permission response (Step S16). Accordingly, the MN can execute the communication.

The procedure of Steps S1 to S16 described above is an existent technique as a signaling including an authentication procedure for the MN to start the communication. On the other hand, in the procedure shown in FIG. 5, the following procedure is added.

That is, after transmitting the ASMM registration response (S12), the HSS notifies the QoS server of the correspondence relationship between the MN and the ASMM (issues an MN correspondence notification; Step S17). The QoS server that has received the MN correspondence notification returns an acknowledgement thereof (ACK) to the HSS (Step S18). According to Step S17, the QoS server can recognize the ASMM which corresponds to the MN and to which the QoS setting instruction is to be transmitted.

Further, in the procedure shown in FIG. 5, Steps S19 and S20 are added. In Step S19, the CNMM that has recognized the MN and the ASMM through the processing of Step S13 transmits the MN correspondence notification including the correspondence relationship between the MN and the CNMM to the QoS server. The QoS server registers the correspondence relationship between the MN and the CNMM in association with the correspondence relationship between the MN and the ASMM obtained in Step S17, and returns the ACK to the CNMM (Step S20).

Accordingly, the QoS server can recognize the ASMM and the CNMM corresponding to the MN, in other words, the nodes to which the QoS setting instruction is to be transmitted in parallel.

According to the seventh embodiment, a key for constructing the SA cannot be distributed, but in a case where it is necessary only to recognize the ASMM and the CNMM that accommodate the MN to which the QoS setting is to be performed without the need for constructing the SA (for example, in a case where the QoS server, the ASMM and The CNMM are located in the same network), the QoS server can recognize locations of the ASMM and the CNMM simply and easily.

### [Eighth Embodiment]

Next, description is made of an eighth embodiment of the present invention. The eighth embodiment includes points in common with the seventh embodiment, and hence description of the points in common is omitted, while different points are mainly described.

As the eighth embodiment of the present invention, description is made of a method as follows.
[8] A method of recognizing, by the QoS server in the home network in accordance with the items [1] to [6], a wireless access system mobile management node that accommodates a mobile terminal, in which when the wireless access systemmobilemanagement node (ASMM) registers the correspondence relationship between the mobile terminal (MN) and its own node in the subscriber information server (HSS) in the home network, the core network mobile management node (CNMM) connected to its own node is also registered with regard to the communication of the MN, and the subscriber information data server (HSS) notifies the QoS server in the home network of the correspondence relationship among the MN, the ASMM, and the CNMM.

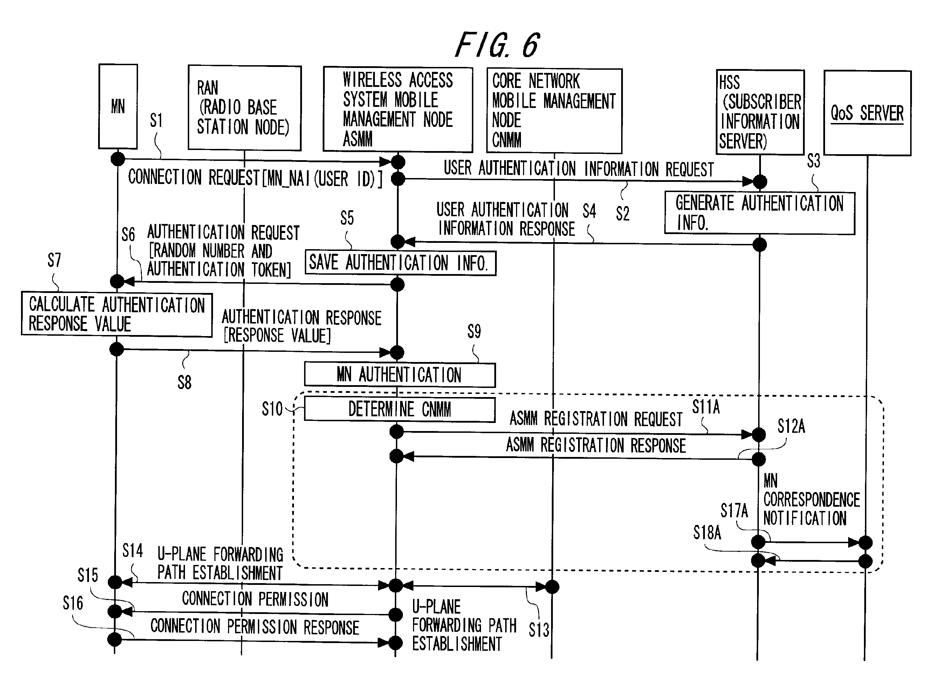

FIG. 6 is a sequence diagram for explaining the eighth embodiment. Steps S1 to S10 and S14 to S16 in a procedure shown in FIG. 6 are the same as in the procedure of the seventh embodiment (FIG. 5). In the eighth embodiment, in Step S11A, the ASMM transmits the ASMM registration request including the correspondence relationship between the ASMM and the CNMM that are related to the MN, to the HSS.

That is, the ASMM registration request includes, for example, the identifier of the MN (MN_NAI), the ASMM-ID, and an identifier of the CNMM (CNMM-ID) determined in Step S10.

The HSS that has received the ASMM registration request registers the MN_NAI, the ASMM-ID, and the CNMM-ID in association with one another, and returns the ASMM registration response to the ASMM (Step S12A). After that, the HSS transmits the MN correspondence notification including the MN_NAI, the ASMM-ID, and the CNMM-ID, to the QoS server (Step S17A). The QoS server saves the identifier included in the MN correspondence notification, and returns the ACK to the HSS (Step S18A).

Thus, in the eighth embodiment, the ASMM determines the CNMM based on information (subscriber information) on the MN, and registers the correspondence relationship between its own node (ASMM) and the determined node (CNMM) with regard to the MN, in the HSS. Accordingly, the QoS server can recognize the ASMM and the CNMM to which the QoS setting instruction is to be transmitted with regard to the MN.

According to the eighth embodiment, in a case where it is necessary only to recognize the ASMM and the CNMM that accommodate the MN without the need for constructing the SA (for example, in a case where the QoS server is located in the same network as those nodes), the QoS server can recognize the locations of those nodes simply and easily.

### [Ninth Embodiment]

Next, description is made of a ninth embodiment of the present invention. The ninth embodiment includes points in common with the seventh embodiment, and hence description of the points in common is omitted, while different points are mainly described.

As the ninth embodiment of the present invention, description is made of a method as follows.
[9] A method of recognizing, by the QoS server in the home network in accordance with the items [1] to [6], a wireless access system mobile management node that accommodates a mobile terminal, in which the core network mobile management node (CNMM) registers not only the correspondence relationship between the mobile terminal (MN) and its own node (CNMM) but also the correspondence relationship with the subordinate mobile management node (ASMM), in the QoS server in the home network.

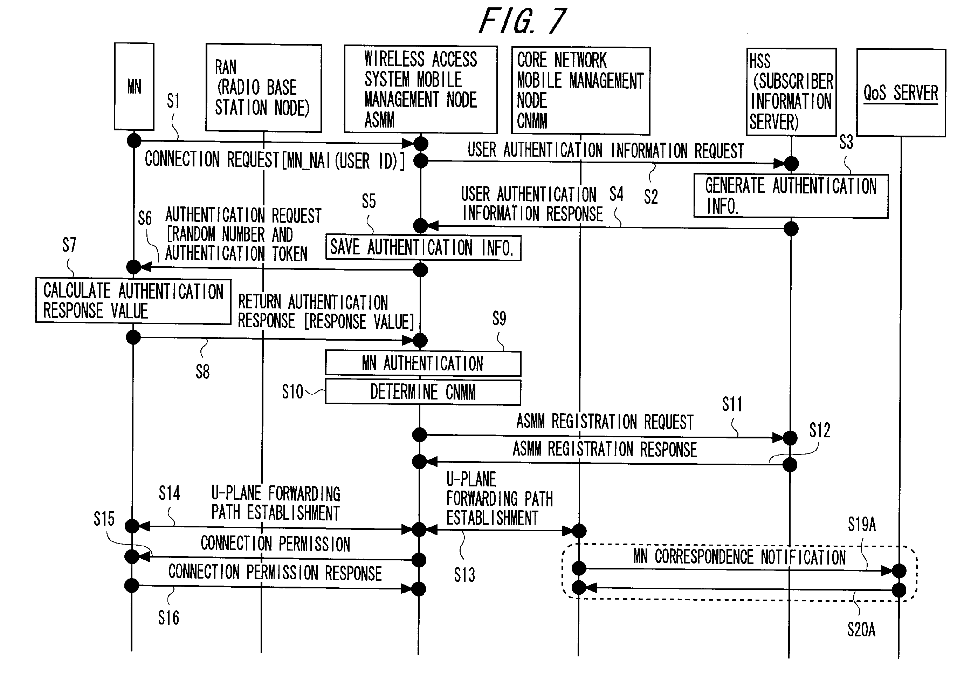

FIG. 7 is a sequence diagram for explaining the ninth embodiment. Steps S1 to S16 in a procedure shown in FIG. 7 are the same as in the procedure of the seventh embodiment (FIG. 5). In the ninth embodiment, in Step S19A, the CNMM transmits the MN correspondence notification including the correspondence relationship between the ASMM and the CNMM that are related to the MN, to the QoS server.

That is, the MN correspondence notification includes, for example, the identifier of the MN (MN_NAI), the ASMM-ID, and the identifier of the CNMM (CNMM-ID) determined in Step S10.

The QoS server that has received the MN correspondence notification registers the MN_NAI, the ASMM-ID, and the CNMM-ID in association with one another, and returns the ACK to the CNMM (Step S20A).
Thus, in the ninth embodiment, the CNMM transmits information on the wireless access system mobile management node (ASMM) being a subordinate node with which the CNMM has a correspondence relationship with regard to the MN, to the QoS server.

According to the ninth embodiment, in a similar manner to the seventh and eighth embodiments, the QoS server can recognize the ASMM and the CNMM to which the QoS setting instruction is to be transmitted with regard to the MN. In addition, it is possible to reduce load on the HSS further compared with the seventh and the eighth embodiments.

### [Tenth Embodiment]

Next, description is made of a tenth embodiment of the present invention. The tenth embodiment includes points in common with the seventh embodiment, and hence description of the points in common is omitted, while different points are mainly described.

As the tenth embodiment of the present invention, description is made of a method as follows.
[10] A method of recognizing, by the QoS server in the home network in accordance with the items [1] to [6], a wireless access system mobile management node that accommodates a mobile terminal, in which the ASMM registers not only the correspondence relationship between the MN and the ASMM but also the correspondence relationship between the superordinate CNMM and ASMM, in the QoS server in the home network.

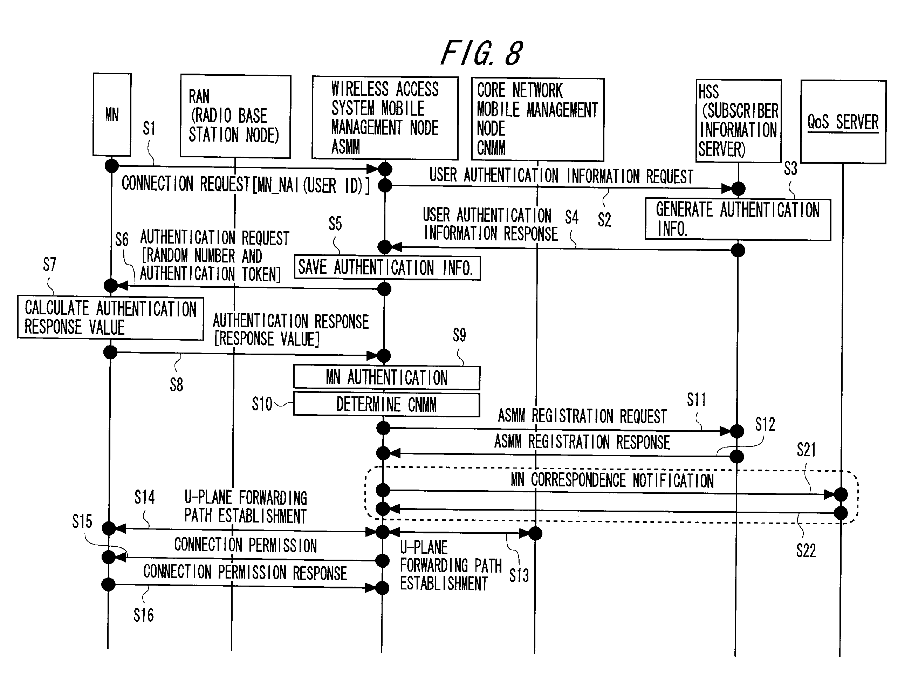

FIG. 8 is a sequence diagram for explaining the tenth embodiment. Steps S1 to S16 in a procedure shown in FIG. 8 are the same as in the procedure of the seventh embodiment (FIG. 5). In the tenth embodiment, after Step S12, the ASMM transmits the MN correspondence notification including the correspondence relationship between the ASMM and the CNMM that are related to the MN, to the QoS server (Step S21).

That is, the MN correspondence notification includes, for example, the identifier of the MN (MN_NAI), the ASMM-ID, and the identifier of the CNMM (CNMM-ID) determined in Step S10.

The QoS server that has received the MN correspondence notification registers the MN_NAI, the ASMM-ID, and the CNMM-ID in association with one another, and returns the ACK to the ASMM (Step S22).

Thus, in the tenth embodiment, the ASMM determines the CNMM based on the information on the MN, and registers the correspondence relationship between the ASMM and the CNMM related to the MN, in the QoS server.

According to the tenth embodiment, in a similar manner to the seventh to ninth embodiments, the QoS server can recognize the ASMM and the CNMM to which the QoS setting instruction is to be transmitted with regard to the MN. In addition, it is possible to reduce load on the HSS further compared with the seventh and the eighth embodiments.

### [Eleventh Embodiment]

Next, description is made of an eleventh embodiment of the present invention. The eleventh embodiment includes points in common with the seventh embodiment, and hence description of the points in common is omitted, while different points are mainly described.

As the eleventh embodiment of the present invention, description is made of a method as follows.
[11] A method for a configuration in accordance with the items [1] to [6] which uses an AAA server to perform an authentication upon a movement including a network connection and a change in the wireless access system mobile management node, in which the wireless access system mobile management node that accommodates the mobile terminal (MN) and the core network mobile management node are notified from the AAA server in the home network to the QoS server in the home network.

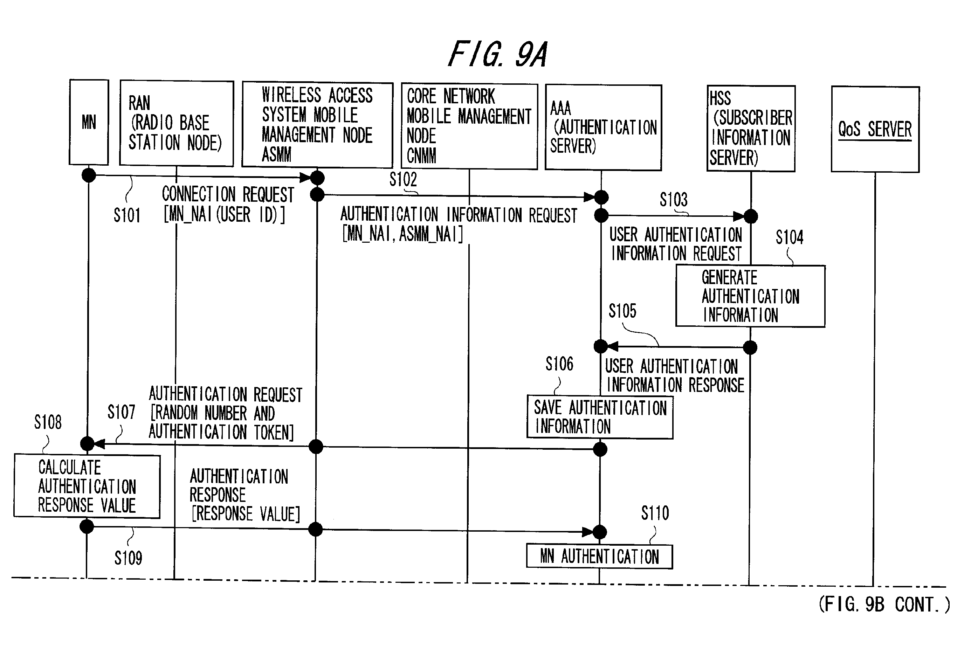

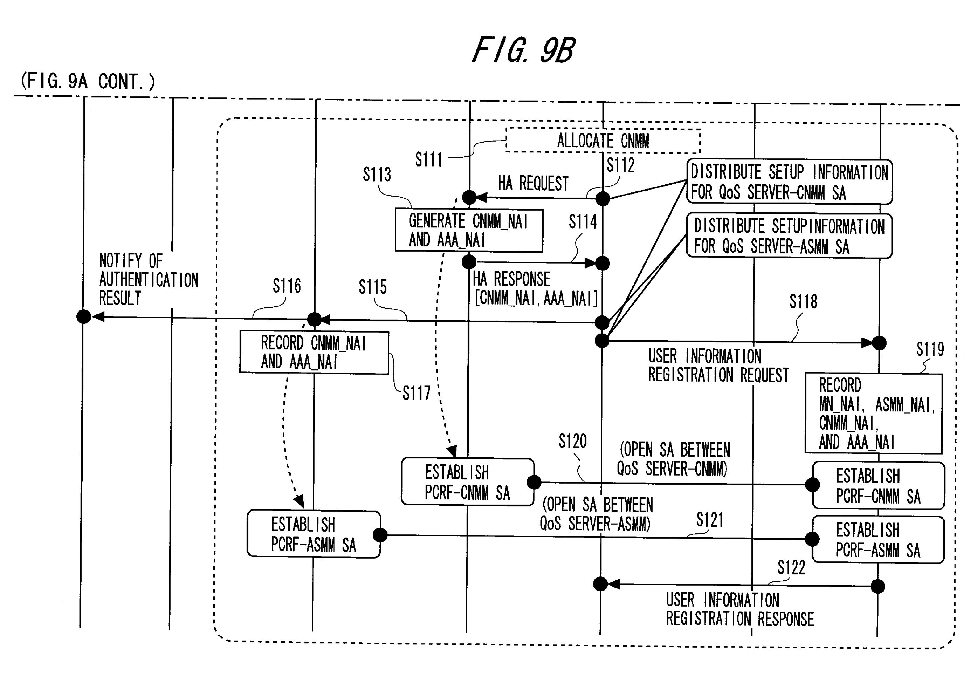

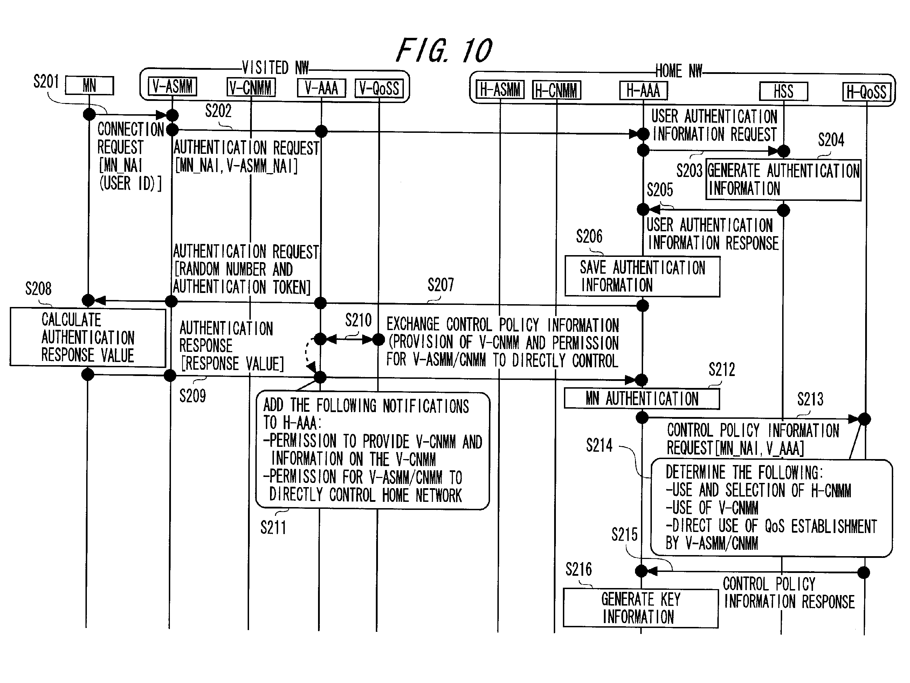

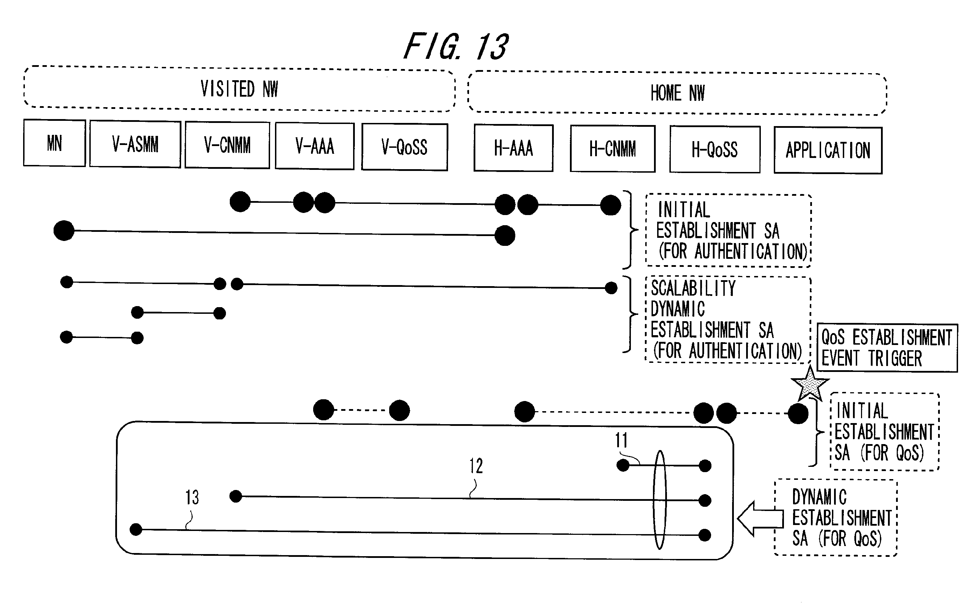

FIGs. 9A and 9B are sequence diagrams for explaining an outline of the eleventh embodiment, and FIGS. 10 to 12 are sequence diagrams for explaining details of the eleventh embodiment. FIG. 13 is an explanatory diagram of SAs constructed through the sequences of FIGS. 10 to 12 and a QoS simultaneous establishment method that uses those SAs.

In FIGs. 9A and 9B, the MN transmits the connection request including the MN_NAI to the ASMM upon the start of the communication or upon a change in the ASMM (Step S101). The ASMM that has received the connection request transmits the authentication information request including the MN_NAI and the ASMM identifier (ASMM_NAI) to the authentication server (AAA server) (Step S102).

The AAA server that has received the authentication information request transmits the user authentication information request to the HSS (Step S103). The HSS generates the authentication information (Step S104), and returns the user authentication information response including the authentication information to the AAA server (Step S105).

The AAA server that has received the user authentication information response saves the authentication information (Step S106), and transmits the authentication request including the random number and the authentication token via the ASMM to the MN (Step S107). The MN that has received the authentication request calculates the authentication response value (Step S108), and returns the authentication response including the response value via the ASMM to the AAA server (Step S109).

The AAA server that has received the authentication response executes the MN authentication based on the saved authentication information and the authentication response (Step S110). If the MN authentication is successful, the AAA server performs the following processing as a CNMM allocation processing (CNMM determination processing).

That is, the AAA server transmits to a given CNMM an HA request that requests to become home agent (HA) of the MN related to the authentication (Step S112). At this time, the AAA server transmits the HA request including information (key information) for setting up the SA between the QoS server and the CNMM.

The CNMM that has received the HA request generates the CNMM_NAI and the AAA_NAI (identifier of the AAA server) (Step S113), and returns an HA response including those to the AAA server (Step S114).

The AAA server that has received the HA response transmits a message including the CNMM_NAI and the AAA_NAI to the ASMM (Step S115). The message includes the information (key information) for setting up the SA between the QoS server and the ASMM. The ASMM that has received the message notifies the MN of an authentication result (successful) (Step S116). Further, the ASMM performs a recording processing for the CNMM_NAI and the AAA_NAI (Step S117).

On the other hand, the AAA server transmits a user information registration request including the MN_NAI, the ASMM_NAI, the CNMM_NAI, and the AAA_NAI, to the QoS server (Step S118). The user information registration request includes the information (key information) for constructing the SAs between the QoS server and the CNMM and between the QoS server and the ASMM.

The QoS server that has received the user information registration request records (saves) the MN_NAI, the ASMM_NAI, the CNMM_NAI, and the AAA_NAI (Step S119).

Thus, from the AAA server, the information for SA establishment is distributed to the CNMM, the ASMM, and the QoS server. Thereby an SA (PCRF-CNMM SA) between the QoS server and the CNMM and an SA (PCRF-ASMM SA) between the QoS server and the ASMM (Steps S120 and S121) are established by usging the SA establishment information.

After that, the QoS server returns a user information registration response to the AAA server (Step S122).

Accordingly, the SAs used in the QoS setting are constructed between the QoS server and the CNMM and between the QoS server and the ASMM. Further, on the QoS server, the NAIs of the CNMM and the ASMM to which the QoS setting instruction is to be transmitted are retained in association with the MN_NAI.

In the detailed sequences shown in FIGS. 10 to 12, the mobile communication system has the following components. That is, the home network (home NW) includes a QoS server (H-QoSS), a subscriber information server (HSS), an authentication server (H-AAA), a core network mobile management node (H-CNMM), and a wireless access system mobile management node (H-ASMM).

On the other hand, a visited network (visited NW) includes the QoS server (V-QoSS), an authentication server (V-AAA), a core network mobile management node (V-CNMM), and a wireless access system mobile management node (V-ASMM). Further, the mobile terminal (MN) is connected to the visited network.

Hereinafter, description is made of procedures shown in FIGS. 10 to 12. In FIG. 10, the MN transmits the connection request including the MN_NAI to the V-ASMM upon the start of the communication or upon a change in the ASMM (Step S201). The ASMM that has received the connection request transmits the authentication request including the MN_NAI and the V-ASMM_NAI via the V-AAA to the H-AAA (Step S202).

The H-AAA that has received the authentication request transmits the user authentication information request to the HSS (Step S203). The HSS generates the authentication information (Step S204), and returns the user authentication information response including the authentication information to the H-AAA (Step S205).

The H-AAA that has received the user authentication information response saves the authentication information (Step S206), and transmits the authentication request including the random number and the authentication token via the V-AAA and the V-ASMM to the MN (Step S207). The MN that has received the authentication request calculates the authentication response value (Step S208), and returns the authentication response including the response value via the V-ASMM and the V-AAA to the H-AAA server (Step S209).

The V-AAA that has received the authentication request exchanges control policy information with the V-QoSS (Step S210). At this time, as a control policy, the V-AAA receives information indicating provision of a V-CNMM and information indicating permission for direct control by the V-ASMM/CNMM. Then, the V-AAA adds the following information to the authentication response received from the V-ASMM (Step S211).
(1) the permission to provide the V-CNMM and the information related to the V-CNMM (V-CNMM_NAI)
(2) the permission to directly control the home network, which is given to the V-ASMM/CNMM
The H-AAA that has received the authentication response executes the MN authentication processing based on the saved authentication information and the authentication response (Step S212). If the MN authentication processing is successful, the H-AAA transmits a control policy information request including the MN_NAI and the V-AAA_NAI to the H-QoSS (Step S213).

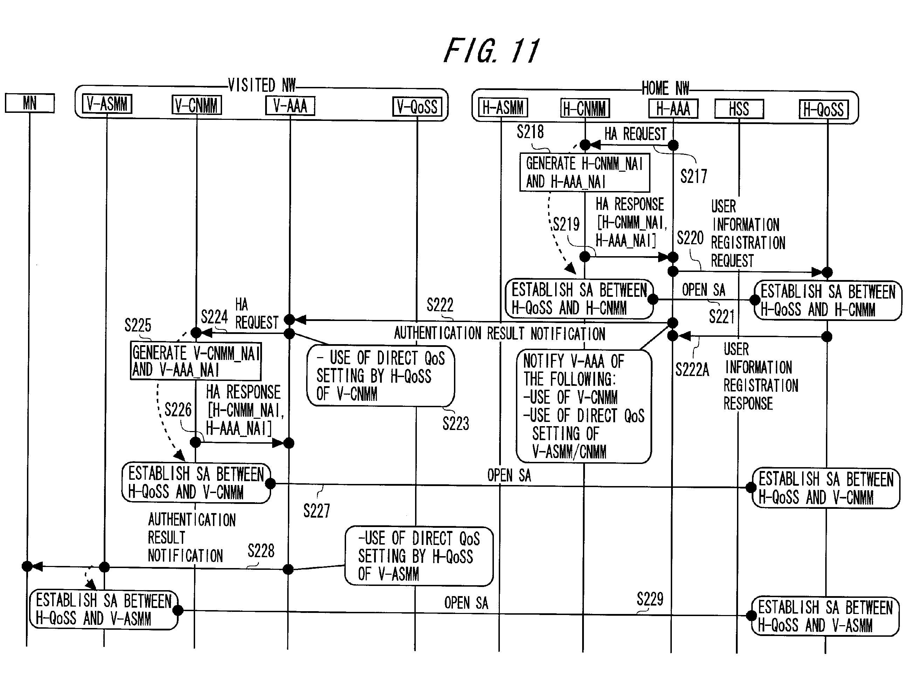

The H-QoSS determines the following items, and returns a control policy information response including results of the determination to the H-AAA (Step S215).
(1) the use and selection of the H-CNMM
(2) the use of the V-CNMM
(3) the direct use of the QoS setting by the V-ASMM/CNMM
The H-AAA generates key information as the information for establishing the SA (Step S216). Subsequently, as shown in FIG. 11, based on the results of the determination by the H-QoSS, the H-AAA transmits the HA request including the key information to the selected H-CNMM (Step S217).

The H-CNMM that has received the HA request generates the H-CNMM_NAI and the H-AAA_NAI (Step S218), and transmits an HA response including those H-CNMM_NAI and H-AAA_NAI to the H-AAA (Step S219).

The H-AAA transmits to the H-QoSS the user information registration request including the MN_NAI, the V-AAA_NAI, the V-ASMM_NAI, the V-CNMM_NAI, the H-CNMM_NAI, and the H-AAA_NAI and the key information for SA establishment (Step S220).

The H-QoSS stores the MN_NAI, the V-AAA_NAI, the V-ASMM_NAI, the V-CNMM_NAI, the H-CNMM_NAI, and the H-AAA_NAI in association with one another.

Further, by the H-QoSS receiving the key information, the SA is established between the H-CNMM and the H-QoSS (Step S221). The H-QoSS transmits the user information registration response to the H-AAA (S222A).

The H-AAA transmits an authentication result notification to the V-AAA (Step S222). The authentication result notification includes the following results of the determination by the H-QoSS. In addition, the authentication result notification includes the key information for SA establishment.
(1) the use of the V-CNMM
(2) the direct use of the QoS setting by the V-ASMM/CNMM
When recognizing the information "the direct use of the QoS setting information made by the H-QoSS to V-CNMM" included in the authentication result notification (Step S223), the V-AAA transmits the HA request to the corresponding V-CNMM (Step S224). The HA request includes the key information for SA establishment.

Upon reception of the HA request, the V-CNMM generates the V-CNMM_NAI and the V-AAA_NAI (Step S225), and transmits the HA response including the V-CNMM_NAI and the V-AAA_NAI to the V-AAA (Step S226). By the notification of the key information, the SA is set up between the V-CNMM and the H-QoSS (Step S227).

Based on the information "the direct use of the QoS setting information made by the H-QoSS to V-ASMM" included in the authentication result notification, the V-AAA transmits the authentication result notification including the key information via the V-ASMM to the MN (Step S228). Accordingly, the V-ASMM receives the key information, and the SA is established between the V-ASMM and the H-QoSS (Step S229).

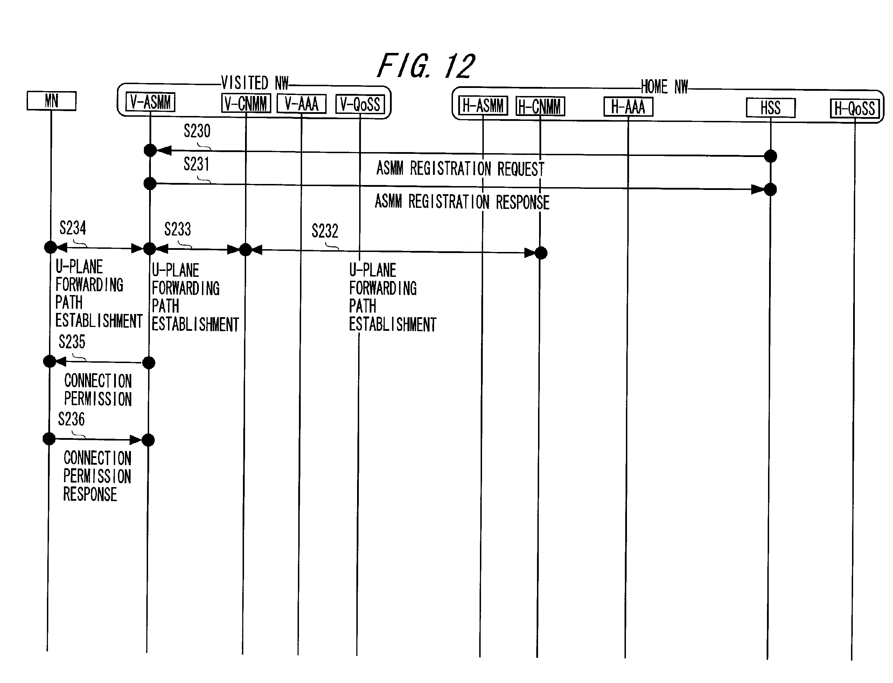

After that, as shown in FIG. 12, the HSS transmits the ASMM registration request to the V-ASMM (Step S230). The V-ASMM transmits the ASMM registration response including the MN_NAI and the V-ASMM_NAI to the HSS (Step S231).

After that, a u-plane forwarding path establishment processing is executed respectively between the H-CNMM and the V-CNMM, between the V-CNMM and the V-ASMM, and between the V-ASMM and the MN (Steps S232 to S234).

When the u-plane forwarding path establishment processing comes to an end, a connection permission message is transmitted from the V-ASMM to the MN (Step S235). The MN that has received the connection permission returns a connection permission response to the V-ASMM (Step S236). After that, the MN goes into a state capable of communication (transmission of user data).

By the procedures shown in FIGS. 10 to 12, as shown in FIG. 13, the SAs 11 to 13 for notifying of the QoS setting instruction from the H-QoSS are dynamically established between the H-QoSS and the H-CNMM, between the H-QoSS and the V-CNMM, and between the H-QoSS and the V-ASMM, respectively (S221, S227, and S229).
After that, if the application within the home network determines the QoS setting (provision of a QoS service) to be performed to the MN (the QoS setting event trigger occurs), the QoS setting request is issued to the H-QoSS. Then, the H-QoSS uses the SAs set up with respect to the H-CNMM, the V-CNMM, and the V-ASMM to transmit the QoS setting instruction, and the H-CNMM, the V-CNMM, and the V-ASMM establishes a QoS based on the QoS setting instruction with respect to the flow of the MN. Accordingly, the MN is provided with the QoS service.

Thus, in the eleventh embodiment, the key information necessary for SA construction is distributed from the AAA server to thereby set up the SA used for the QoS-in-paralell-establishment as described in the first embodiment. Further, as a method of distributing SA construction information to the wireless access system mobile management node, a method of piggybacking the SA construction information on the authentication information is applied.

According to the eleventh embodiment, it is possible to construct the SA to be used at a time of the QoS setting. Further, the SA construction information is piggybacked on the authentication information in order to be distributed to the wireless access system mobile management node. Therefore, the number of messages is reduced. In addition, the SA construction information can be safely distributed, which raises a security guarantee degree.

### [Twelfth Embodiment]

Next, description is made of a twelfth embodiment of the present invention. The twelfth embodiment includes points in common with the eleventh embodiment, and hence description of the points in common is omitted, while different points are mainly described.

As the twelfth embodiment of the present invention, description is made of a method as follows.
[12] A scheme characterized in that: the node in the visited network in accordance with the item [6] performs a registration processing to the QoS server in the visited network by using the same registration method as the registration method for the QoS server in the home network in accordance with the items [7] to [11]; and the QoS server in the visited network that has received the registration registers node information to the QoS server in the home network as a representative of the QoS setting-subj ect node related to the mobile terminal.

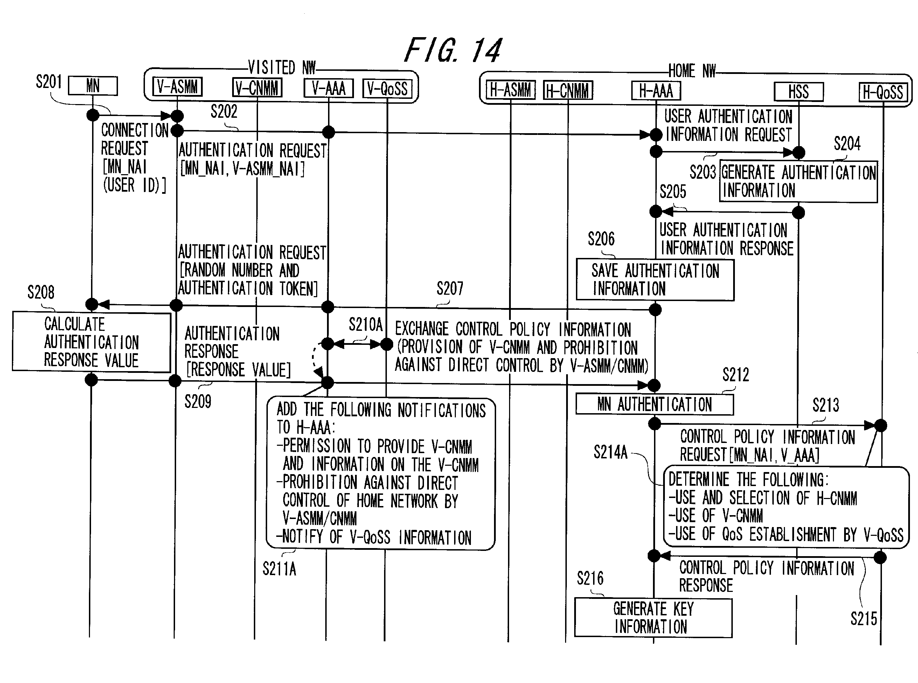

FIGS. 14 to 16 are sequence diagrams (sequence diagrams for causing the home network to perform the QoS providing service in the configuration of FIG. 4C based on the operational policy of the visited network) for explaining details of the twelfth embodiment.

The system configurations shown in FIGS. 14 to 16 are the same as the system configurations shown in FIGS. 10 to 12, and the procedure shown in FIG. 14 is substantially the same as the procedure showninFIG. 10. However, inFIG. 14, in the control policy information exchanged between the V-AAA and the V-QoSS in Step S210A, unlike the eleventh embodiment, a prohibition against a direct control by a V-ASMM/CNMM is transmitted from the V-QoSS to the V-AAA.

In this case, in Step S211A, the V-AAA transmits to the H-AAA the authentication response including: information indicating "the permission to provide the V-CNMM and the V-CNMM information (V-CNMM_NAI) " and "the prohibition against the direct control of the home network by the V-ASMM/CNMM"; and V-QoSS information.

Then, upon reception of a control policy information supply, the H-QoSS in the home network determines the use of the QoS setting by V-QoSS (Step S214A). The H-AAA is notified of the information indicating "the use of the QoS setting by the V-QoSS" (Step S215).

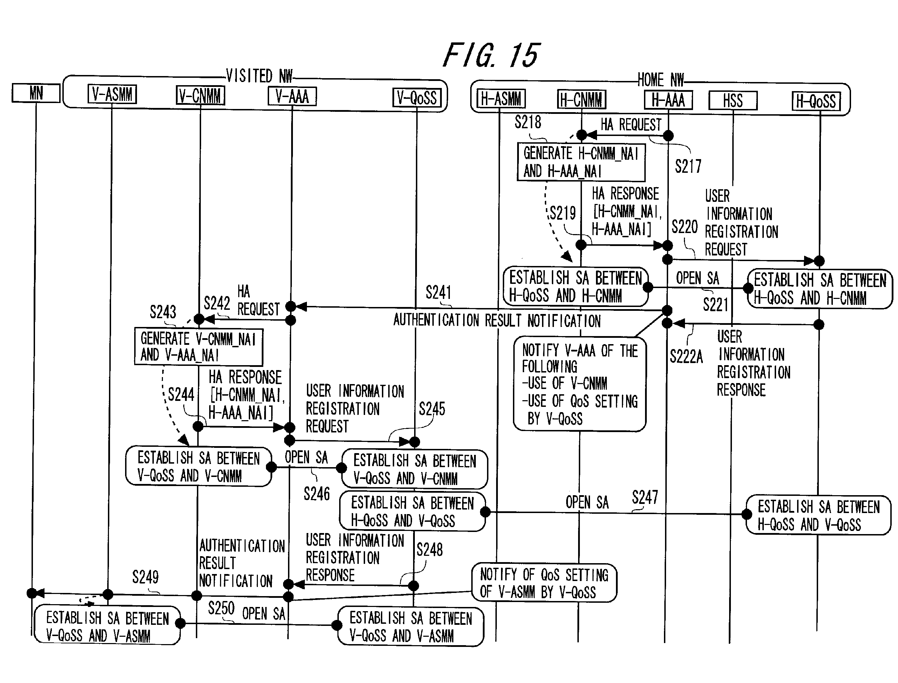

The processing of Steps S217 to S221 and S222A shown in FIG. 15 is the same as that of the procedure shown in FIG. 11. However, the processing of Step S241 and the subsequent steps is different from that of the procedure shown in FIG. 11.

That is, after the SA is set up between the H-QoSS and the H-CNMM, the H-AAA transmits the authentication result notification to the V-AAA (Step S241). TheH-AAA includes the following information in the authentication result notification.
(1) the use of the V-CNMM
(2) the use of the QoS setting by the V-QoSS (including key information)
The V-AAA that has received the authentication result notification transmits the HA request to the V-CNMM (Step S242). At this time, the V-AAA includes a notification (key information) of "the QoS setting of the V-CNMM by the V-QoSS" in the HA request.

The V-CNMM that has received the HA request generates the V-CNMM_NAI and the V-AAA_NAI, and transmits an HA response including those to the V-AAA (Steps S243 and S244).

The V-AAA transmits to the V-QoSS the user information registration request including the V-CNMM_NAI and the V-AAA_NAI (Step S245). At this time, the V-AAA includes the key information for SA setup in the user information registration request.

Accordingly, the SA for a QoS setting is established between the V-QoSS and the V-CNMM (Step S246). In addition, the SA for a QoS setting is established between the V-QoSS and the H-QoSS (Step S247).

After that, the V-QoSS transmits the user information registration response to the V-AAA (Step S248), and the V-AAA transmits the authentication result notification via the V-ASMM to the MN (Step S249). The authentication result notification includes information indicating "the QoS setting of the V-ASMM by the V-QoSS" (key information for SA establishment).

Accordingly, the SA for a QoS setting is set up between the V-ASMM that has received the authentication result notification and the V-QoSS (Step S250).

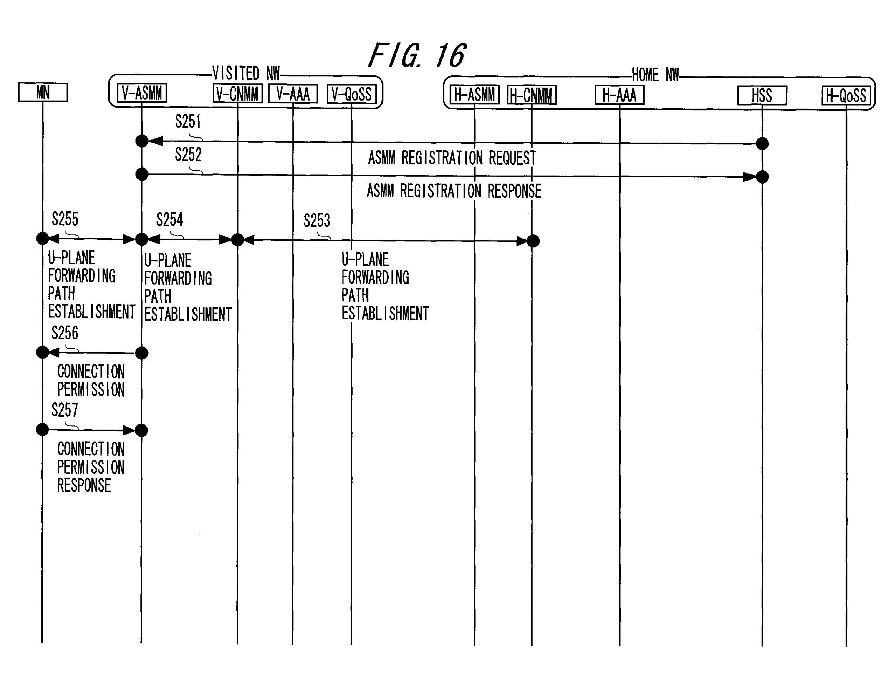

After that, as shown in FIG. 16, the HSS transmits the ASMM registration request to the V-ASMM (Step S251). The V-ASMM transmits the ASMM registration response including the MN_NAI and the V-ASMM_NAI to the HSS (Step S252).

After that, the u-plane forwarding path establishment processing is executed respectively between the H-CNMM and the V-CNMM, between the V-CNMM and the V-ASMM, and between the V-ASMM and the MN (Steps S253 to S255).

When the u-plane forwarding path establishment processing comes to an end, the connection permission message is transmitted from the V-ASMM to the MN (Step S256). The MN that has received the connection permission returns the connection permission response to the V-ASMM (Step S257). After that, the MN shifts to the state capable of communication (transmission of user data).

In the twelfth embodiment, when the QoS setting event trigger occurs at the application in the home network, the H-QoSS uses a previously constructed SA to transmit the QoS setting request to the V-QoSS. According to the QoS setting request, the V-QoSS uses the SA set up between itself and the V-CNMM/V-ASMM to issue the QoS setting instruction to the V-CNMM and the V-ASMM. According to the QoS setting instruction, the V-CNMM and the V-ASMM perform the QoS setting to the communication flow of the MN.

According to the twelfth embodiment, it is possible to construct the SA for performing a QoS setting. Further, the SA construction information is piggybacked on the authentication information in order to be distributed to the wireless access system mobile management node, which allows reduction in the number of messages and safe distribution of the SA construction information, raising the security guarantee degree.

### [Thirteenth Embodiment]

Next, description is made of a thirteenth embodiment of the present invention. The thirteenth embodiment corresponds to a modified example of the eleventh and twelfth embodiments.

In the thirteenth embodiment, description is made of a method as follows.
[13] A scheme characterized in that in the configuration in accordance with the items [3] to [5], in addition to the notification of the correspondence relationship information in accordance with the items [7] to [11], information for constructing a security association (SA) is exchanged between the QoS server in the home network and the node in the visited network, and the security association is constructed therebetween and is used by the QoS server in the home network to perform a direct establishment.

That is, in the thirteenth embodiment, the QoS server distributes information necessary to construct the SA to the QoS setting-subject node recognized by any one of or a combination of the seventh to eleventh embodiments via a path (SA communication path) guaranteed existent security.

In the thirteenth embodiment, the number of necessary messages is larger than that of the eleventh and twelfth embodiments. However, it is possible to construct the SA for executing the QoS setting directly from the QoS server. The configuration of the thirteenth embodiment is effective in a case where a security guarantee mechanism such as a security gateway exists between the visited network and the home network.

### [Fourteenth Embodiment]

Next, description is made of a fourteenth embodiment of the present invention. In the fourteenth embodiment, description is made of a method as follows.
[14] A scheme for the mobile communication system in accordance with the item [1], in which an establishment method for both of the parallel QoS setting performed to the wireless access system mobile management node and the core network mobile management node and the QoS setting performed to the wireless access system mobile management node via the core network mobile management node is selected depending on a content of the QoS service.

In a case where a QoS setting accompanied by a band establishment is executed, when a band resource is not guaranteed for any one of the QoS setting-subject nodes, it is necessary to issue a resource release instruction to the node that has successfully secured the band resource.

In such a system as shown in FIG. 1, QoS settings are sequentially executed in series. Therefore, there is no need of a procedure for issuing such a resource release instruction. In the fourteenth embodiment, in order to eliminate the load of a post-processing at a time when such a band resource fails to be guaranteed, the parallel setting is performed only for setting that needs only distribution of identification information on a QoS setting-subject flow that needs no post-processing and priority information at a time of forwarding.

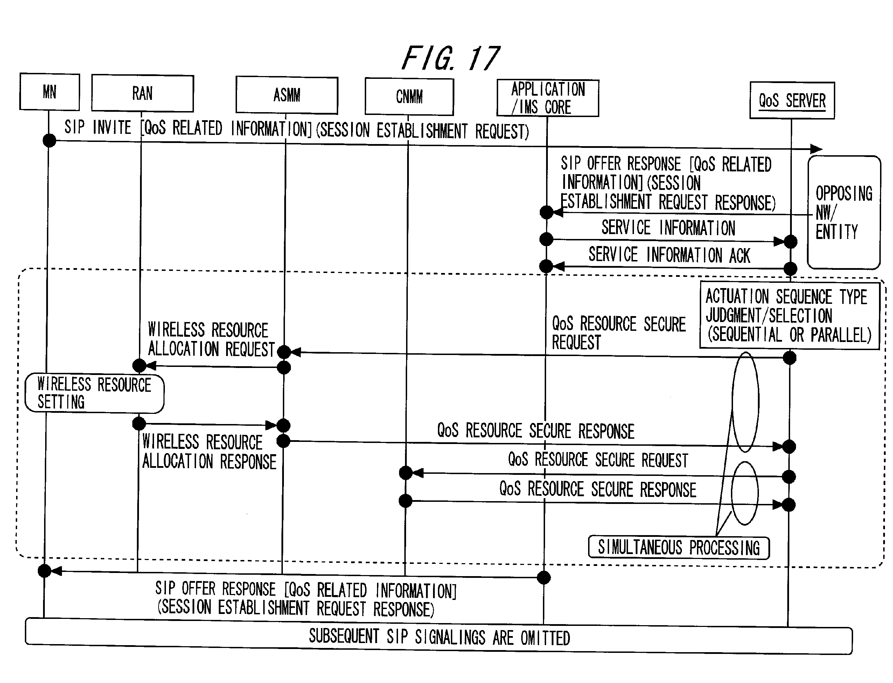

FIG. 17 shows an embodiment of a setting performed in parallel and an example of the timing of determining with respect to QoS settings performed in parallel to the wireless access system mobile management node (ASMM) and the core network mobile management node (CNMM), in a case of using an IP multimedia subsystem (IMS) which is a standard for realizing a multimedia communication including audio/video and data services by using an Internet protocol (IP) network in the mobile communication.

An IMS Core shown in FIG. 17 is a system for realizing a service based on the IMS. The IMS Core manages/maintains a communication session state within a network, operates in linkage with the Application, and provides session control corresponding to the service.

In order to receive and control a session request issued from the MN, a signal control protocol based on a session initiation protocol (SIP) isusedintheIMS. The SIP conveys a session description protocol (SDP) that describes information on capabilities of the MN and required quality/characteristics (QoS related information) related to a session, and negotiates the capabilities and quality with the network side and the corresponding MN on the other end of the communication.

In FIG. 17, the IMS core that has received from an opposing network a session establishment request response (SIP Offer Response) on which the information on the capabilities of the corresponding MN on the other end of the communication is reflected operates in linkage with the Application based on the received information, generates service information including QoS information related to the requested session, and transmits the service information to the QoS server.

The QoS server returns to the IMS Core a response acknowledgement (ACK) with respect to the service information reception, and based on the reception, makes a selection between actuation sequences for performing a parallel processing (parallel QoS setting) of the QoS setting to the CNMM and the ASMM and for performing a serial processing of the QoS setting (serial/sequential QoS setting) in an order from the CNMM to the ASMM. If it is determined that the simultaneous QoS setting is possible from a content of the service information, the QoS server performs the parallel QoS setting as shown in FIG. 17. On the other hand, if it is judged that the simultaneous QoS setting is impossible from the content of the service information, the QoS server performs the serial/sequential QoS setting as shown in FIG. 1.

According to the fourteenth embodiment, in a case where a band resource cannot be guaranteed for one of the CNMM and the ASMM, for example, the QoS server issues an instruction to release the guaranteed resource, avoiding a release processing from being performed. Accordingly, it is possible to reduce the load on the QoS server.

Note that, in the selection judgment between the parallel QoS setting and the serial/sequential QoS setting described hereinabove, and an establishment scheme can be selected in consideration of not only the content of the service information but also a state of the load on the home network.

That is, a setting mode is dynamically switched over in such a manner that if communication load on the QoS server and the home network is low, the parallel QoS setting is selected irrespective of the content of the service information, and if the load is high, the sequential QoS setting is selected. Accordingly, it is possible to reduce an average QoS setting time.

Further, in the case as described hereinabove where the setting mode is dynamically switched over in consideration of the communication load on the QoS server and the home network, if the QoS setting-subject node exists in the visited network, such a configuration is possible that the QoS setting scheme is selected in consideration of an amount of communication exchanges between the visited network and the home network.

That is, the setting mode is switched over in consideration of the load on the visited network corresponding (connected) to the home network. Accordingly, the post-processing at the time when the resource cannot be guaranteed for the node in the visited network and the QoS server can be avoided, which can reduce the load.

### [Others]

The configurations described in the first to fourteenth embodiments can be appropriately combined within the scope that does not depart from the object of the present invention.

Further, in a case where an architecture under review by 3GPP is employed, the wireless access system mobile management node (ASMM), the core network mobile management node (CNMM), and the QoS server, which are described in the first to fourteenth embodiments, correspond to nodes implemented with User Plane Entity (UPE) /Mobility Management Entity (MME), Inter Access SystemAnchor (IASA), and Policy and Charging Rule Function (PCRF) /Subscriber Profile Repository (SPR), respectively.

Further, in a system constructed by using Mobile IPv4, the wireless access system mobile management node and the core network mobile management node correspond to the foreign agent (FA) and the home agent (HA), respectively.

Further, in a system constructed by using Proxy Mobile IPv6, the wireless access system mobile management node and the core network mobile management node correspond to nodes implemented with a mobile proxy agent (MPA) and a local mobility anchor point (LMAP), respectively.

Further, in addition to the wireless access systemmobile management node and the core network mobile management node, the radio base station node (RAN) can be set as the simultaneous establishment subject.

## Claims

1. A QoS server, comprising:
a receiving unit that receives a QoS setting request for a communication flow of a mobile terminal; and
a transmitting unit that transmits, in parallel, a QoS setting instruction based on the QoS setting request to both of a wireless access system mobile management node that accommodates the mobile terminal and a core network mobile management node that manages the wireless access system mobile management node.

2. A QoS server according to claim 1, wherein in a case where the mobile terminal is accommodated in the wireless access system mobile management node located in a home network of the mobile terminal, the transmitting unit transmits, in parallel, the QoS setting instruction to both of the wireless access system mobile management node and the core network mobile management node each of which is located in the home network of the mobile terminal.

3. A QoS server according to claim 1, wherein in a case where the mobile terminal is accommodated in the wireless access system mobile management node located in a visited network different from a home network of the mobile terminal, the transmitting unit transmits, in parallel, the QoS setting instruction to both of the wireless access system mobile management node located in the visited network and the core network mobile management node located in the home network of the mobile terminal.

4. A QoS server according to claim 1, wherein in a case where the mobile terminal is accommodated in the wireless access system mobile management node located in a visited network different from a home network of the mobile terminal, the transmitting unit transmits, in parallel, the QoS setting instruction to both of the wireless access system mobile management node and the core network mobile management node each of which is located in the visited network.

5. A QoS server according to claim 1, wherein in a case where the mobile terminal is accommodated in the wireless access system mobile management node located in a visited network different from a home network of the mobile terminal, the transmitting unit transmits, in parallel, the QoS setting instruction to the wireless access system mobile management node in the visited network, the core network mobile management node in the visited network, which manages the wireless access system mobile management node in the visited network, and the core network mobile management node located in the home network.

6. A QoS server according to claim 1, wherein in a case where the mobile terminal is accommodated in the wireless access system mobile management node located in a visited network different from a home network of the mobile terminal, the transmitting unit transmits, in parallel, a QoS setting request transmission to the QoS server in the visited network and the QoS setting instruction to the core network mobile management node located in the home network.

7. A QoS server according to claim 1, wherein a correspondence relationship between the wireless access system mobile management node and the core network mobile management node that are related to the mobile terminal is received from a subscriber information server located in a home network of the mobile terminal.

8. A QoS server according to claim 7, wherein the correspondence relationship between the wireless access system mobile management node and the core network mobile management node that are related to the mobile terminal, which is notified from the wireless access system mobile management node to the subscriber information server, is received from the subscriber information server.

9. A QoS server according to claim 1, wherein a correspondence relationship between the wireless access system mobile management node and the core network mobile management node that are related to the mobile terminal is received from the core network mobile management node.

10. A QoS server according to claim 1, wherein a correspondence relationship between the wireless access system mobile management node and the core network mobile management node that are related to the mobile terminal is received from the wireless access system mobile management node.

11. A QoS server according to claim 1, wherein a correspondence relationship between the wireless access system mobile management node and the core network mobile management node that are related to the mobile terminal is received from an authentication server that performs an authentication related to the mobile terminal.

12. A QoS server according to claim 1, wherein in a case where the mobile terminal is accommodated in the wireless access system mobile management node located in a visited network different from a home network of the mobile terminal, a correspondence relationship between the wireless access system mobile management node and the core network mobile management node that are related to the mobile terminal, which is notified from the visited network, is received.

13. A QoS server according to claim 1, wherein a security association for transmitting/receiving the QoS setting instruction is constructed between the wireless access system mobile management node and the core network mobile management node.

14. A QoS server according to claim 1, wherein a QoS setting method selection is made, depending on a content of a QoS service to be established to the mobile terminal, from a first method of parallel transmitting the QoS setting instruction and a second method of transmitting the QoS setting instruction to the core network mobile management node and causing the core network mobile management node to transmit the QoS setting instruction to the wireless access system mobile management node.

15. A QoS server according to claim 14, wherein a state of load on the mobile terminal in a home network is taken into consideration in the QoS setting method selection made from the first method and the second method.

16. A QoS server according to claim 14, wherein in a case where the mobile terminal is accommodated in the wireless access system mobile management node in a visited network different from a home network of the mobile terminal, a state of load in the visited network is taken into consideration in the QoS setting method selection made from the first method and the second method.
